Europäisches Patentamt

European Patent Office

Office européen des brevets

(11) Veröffentlichungsnummer: **0 485 876 A2**

## (12) EUROPÄISCHE PATENTANMELDUNG

(21) Anmeldenummer: **91118884.5**

(22) Anmeldetag: **06.11.91**

(51) Int. Cl.5: **F16J 15/18**, F16J 15/38

(30) Priorität: **14.11.90 DE 4036217**

(43) Veröffentlichungstag der Anmeldung:
**20.05.92 Patentblatt 92/21**

(84) Benannte Vertragsstaaten:
**AT DE ES FR GB IT**

(71) Anmelder: **J.M. Voith GmbH**
**Sankt Pöltener Strasse 43**
**W-7920 Heidenheim(DE)**

(72) Erfinder: **Piper, Michael**
**Donauschwabenstrasse 5**
**W-7920 Heidenheim(DE)**
Erfinder: **Rienecker, Reimund**
**Kleiststrasse 9**
**W-7920 Heidenheim(DE)**
Erfinder: **Kleinert, Rudi**
**Im Ehrenfeld 9**
**W-7929 Dettingen(DE)**
Erfinder: **Schneider, Walter**
**Narzissenweg 10**
**W-7920 Heidenheim 8(DE)**

(74) Vertreter: **Weitzel, Wolfgang, Dr.-Ing. et al**
**Friedenstrasse 10**
**W-7920 Heidenheim(DE)**

(54) **Stopfbuchse.**

(57) Die Erfindung betrifft eine Stopfbuchsdichtung für Wellen gegenüber festen Wandungen eines Gehäuses oder ähnliches. Die Erfindung zeichnet sich durch einen an der Welle vorgesehenen Bund oder mit ihr dicht und fest verbundenen Ring oder Ringflansch mit einer zur Wellendrehachse senkrechten Ringfläche, an der die Stopfbuchspackung in wellenaxialer Richtung dichtend abgestützt ist, aus.

EP 0 485 876 A2

Rank Xerox (UK) Business Services
(-/2.18/2.0)

Die Erfindung betrifft eine Stopfbuchsdichtung für Wellen gegenüber festen Wandungen eines Gehäuses oder ähnlichem entsprechend dem Oberbegriff des Patentanspruchs 1. Eine solche Dichtung ist bekannt aus der US-PS 3 659 862.

Bekanntlich bestehen solche Stopfbuchsdichtungen aus Weichpackungsringen, die zwischen Welle und der entsprechenden Gehäusewandung oder einem damit verbundenen, festen Bauteil in einem Ringraum angeordnet sind und über die sogenannte Stopfbuchsbrille sowohl gegen die Welle als auch gegen die entsprechende Gehäusewandung dichtend gepreßt werden. Es ist leider oft so, daß die Welle nicht genau rund läuft, sondern mit einem "Schlag". Wenn dieser "Schlag" auch nur 0,2 bis 0,3 mm beträgt, so führt er doch dazu, daß in nicht tragbarer kurzer Zeit die Leckageverluste an Flüssigkeit aus dem abzudichtenden Raum unzulässig groß werden. Durch diesen "Schlag" der Welle wird ja die Stopfbuchspackung in radialer Richtung aufgeweitet. Der unrunde Lauf der Welle kann auch durch Unwuchten oder Fertigungsungenauigkeiten, häufig aber durch Belastungen der Welle im Betrieb hervorgerufen werden. Um dem Aufweiten der Stopfbuchspackung zu begegnen, muß bei den konventionellen Stopfbuchsdichtungen sehr häufig die Stopfbuchsbrille nachgezogen werden, um den Dichtspalt wieder auf Null zu bringen. Dadurch wird natürlich die Standzeit der Stopfbuchspackung erheblich vermindert.

Gemäß der DE-PS 711 850 hat man versucht, die Standzeit einer Stopfbuchspackung dadurch zu verbessern, daß man eine axiale Anschlagfläche für die Stopfbuchspackung in Form eines Wellenbundes vorgesehen hat. Dies brachte eine gewisse Verbesserung, vor allem in Verbindung mit Druckfedern.

Ähnliche Ausführungsformen, die sich den beschriebenen Gedanken einer axialen Anschlagfläche einer weichen ringförmigen Dichtung zunutze machten, sind beschrieben in GB-PS 644 017 und GB-PS 1 111 615, BE-PS 564 493, FR-PS 403 498 und SU-PS 918 607.

Alle diese vielen Ausführungsbeispiele des Standes der Technik für Dichtungen, die weiches Dichtungsmaterial verwenden, belegen, daß in der Wirtschaft ein akutes und intensives Bedürfnis für eine Dichtung mit hoher Betriebsdauer bestanden hat, daß jedoch der einfache, erfindungsgemäße Weg nicht erkannt worden ist.

Die Aufgabe der Erfindung ist es, eine Stopfbuchsdichtung mit hoher Standzeit anzugeben, ohne daß aufwendige Mittel zum Ausgleichen der Unwucht der Welle vorgesehen werden.

Diese Aufgabe wird erfindungsgemäß bei einer Stopfbuchsdichtung durch die kennzeichnenden Merkmale des Patentanspruchs 1 gelöst.

Erfindungsgemäß ist erkannt worden, daß unter Verwendung der axialen, an der Welle gebildeten Dichtfläche und der entgegenwirkenden Federkraft, die normale Stopfbuchspackungsdichtung eine wesentlich höhere Standzeit haben kann. Mit den scharfkantigen Oberflächenunregelmäßigkeiten ergibt sich eine überraschend sehr einfache und kostengünstige Lösung. Dabei ist noch erkannt worden, daß es wichtig ist, daß die Anschlagsfläche der Stopfbuchspackung einen größeren Außendurchmesser hat als letztere.

Aufgrund der praktischen Ergebnisse kann nämlich davon ausgegangen werden, daß das axiale Wellenspiel sehr klein ist und daher nicht zu Leckagen am radialen Dichtspalt der Stopfbuchspackung führt.

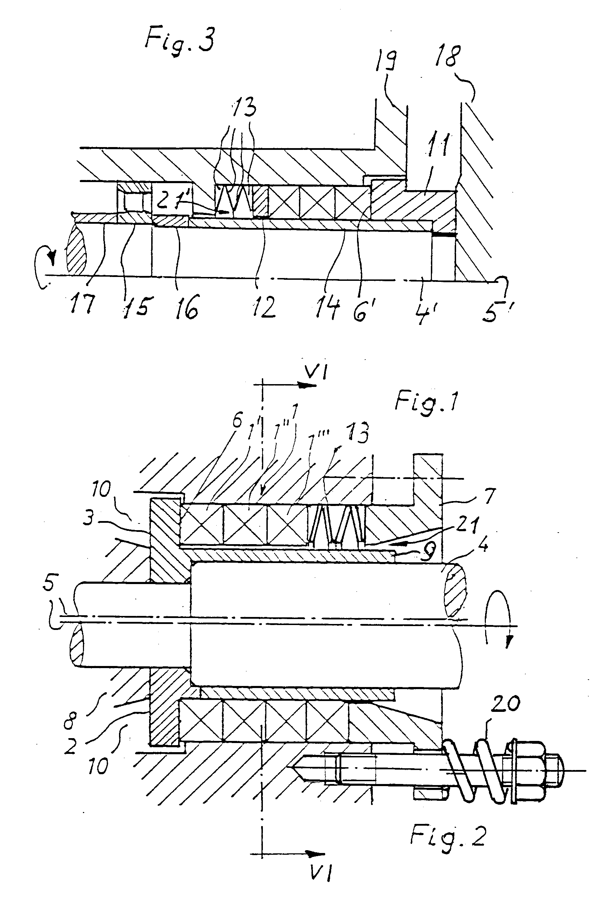

Nachfolgend wird anhand von vier Ausführungsbeispielen die erfindungsgemäße Lösung erläutert. Dabei stellen die Figuren Axialschnitte durch die erfindungsgemäße Stopfbuchsdichtung dar, und zwar gemäß Fig. 1 und 2 bzw. 4 und 5 jeweils mit einer oberen und unteren Hälfte.

In den verschiedenen Figuren sind im wesentlichen gleiche oder ähnliche Bauteile jeweils mit dem gleichen, apostrophierten Bezugszeichen versehen.

In Fig. 1 sind mit 1', 1'' usw. die Packungsringe der Stopfbuchspackung 1 bezeichnet. Diese werden über die Anpreßbuchse (Stopfbuchsbrille) 7 gegen den Ringflansch 3 einer Wellenbuchse 9 gepreßt. Die Wellenbuchse ist dabei mit Preßsitz auf die Welle 4 aufgezogen, und in axialer Richtung durch ein Bauteil 8, das auf der Welle befestigt ist, festgelegt. Dieses Bauteil 8 könnte z.B. eine Traghülse der Tragscheibe eines Pumpenlaufrades sein, falls es sich beim Ausführungsbeispiel um eine Pumpe handeln würde.

Die axiale Länge des Querschnitts dieser Stopfbuchspackung verhält sich zur Breite desselben mindestens 2:1, vielfach sogar mindestens 3:1.

Die Anpreßbuchse 7 endet dabei an der Stopfbüchsenpackung und behindert radial innen deren freie Verformung, z.B. durch den Wellenschlag, nicht.

Da die Wellenbuchse 9 auf die Welle aufgezogen ist, dichtet sie an der Welle ab. Es ist nun die Stopfbuchspackung 1 nach langer Betriebszeit, d.h. mit einem vergrößerten Spalt zwischen der Wellenbuchse 9 und ihrer inneren Wandung innerhalb eines Stopfbuchsenringraumes 21 angeordnet dargestellt. Dies kommt dadurch, daß die Welle durch einen geringfügigen Schlag die Stopfbuchspackung radial nach außen aufgeweitet hat. Dadurch liegt die Stopfbuchspackung im wesentlichen radial nur noch am Gehäuse an. Trotzdem kommt es aber nicht zu Leckagen, weil der dargestellte Spalt, der an sich zu Leckagen führt, in radialer Richtung abgedichtet ist durch die radiale Ringfläche 6 an der Wellenhülse bzw. an dem Ringflansch 3 derselben. Diese Ringfläche 6 könnte natürlich auch an einem Ring angebracht sein, wie er mit 2 in Fig. 2 dargestellt ist. In diesem Fall muß das Bauteil 8 in radialer Richtung gegen den Ring 2 abdichten. Auch dann kann keine Leckflüssigkeit aus dem Raum 10 austreten.

Mittels Federn 20 wird auch bei längerer Betriebszeit der nötige Anpreßdruck für die Dichtung aufrechterhalten.

Es empfiehlt sich, entweder das Bauteil, das die Ringfläche 6 trägt, also den Ring 2, Flanschring 11 oder die Wellenbuchse 9, mit einer Oberfläche aus sehr verschleißfestem Material, wie z.B. Chromcarbid, herzustellen. Es genügt aber, wenn das entsprechende Bauteil im Bereich der Ringfläche 6 mit einer Beschichtung aus derartig verschleißfestem Material versehen ist.

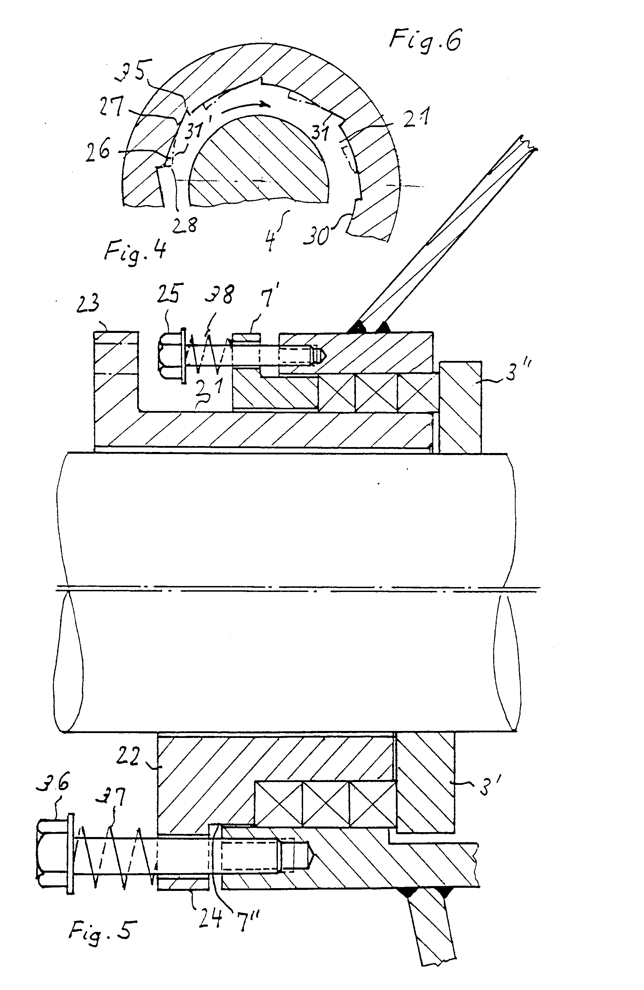

In Figur 3 ist ein Ausschnitt von Welle 4' und Gehäuse 19 einer Maschine im Bereich der Stopfbuchsendichtung mit einem Rotor 18 dargestellt, wobei es sich um den Rotor einer mit einem zylindrischen Sieb, innerhalb welchem der Rotor 18 rotiert, versehenen Sortiereinrichtung oder um den eines Stofflösers handeln kann. Um die Welle herum ist eine Schonbüchse 14 angeordnet, die einen Ring 11 mit einem eine axiale Druckfläche 6' aufweisenden Ringflansch auf der Welle 4', deren Achse mit 5' bezeichnet ist, festlegt. Auf der anderen Seite der Stopfbuchspackung befindet sich ein Gegenring 12, der einen Federraum begrenzt, in welchem sich Tellerfedern 13 befinden, welche einen nachgiebigen Gegendruck auf die Stopfbuchspackung ausüben. Mit je einem Abstandsring 16 und 17 ist auf der Welle ein Zylinderrollenlager 15 festgelegt. Man erkennt, daß auch bei schwierigen Einbauverhältnissen keine größeren konstruktiven Probleme auftreten. Es besteht durch die Federkraft immer eine ausreichende Anpressung der Stopfbuchsenpackung, um eine ausreichende Dichtwirkung in radialer Richtung nämlich an der Gegendruckfläche 6' zu erreichen. Vorzugsweise ist der Außendurchmesser der Druckfläche 6, 6' größer als der der Stopfbuchspackung.

Gemäß den Figuren 4 und 5 ist die Wellenschonbüchse nicht mehr vorgesehen, dafür eine Fixierhülse 21 bzw. 22, die radial innen den Ringraum für die Stopfbuchspackung begrenzt, so daß in diesem Bereich kein Verschleiß eines Teils mehr auftreten kann, wie es im Falle der Wellenschonbüchse der Fall ist. Für die Anpressung der Stopfbuchspackung ist gemäß Figur 4 zusätzlich eine Anpreßbuchse 7' vorgesehen, während dies gemäß der Ausführungsform nach Figur 5 ein Vorsprung 7" der Fixierhülse 22 besorgt.

Jeweils mit einem außenliegenden Flansch 23 bzw. 24 wird die Anpreßbuchse 7 Fixierhülse 22 mittels Schrauben 35 bzw. 36 festgelegt. Es sind Federn 37 bzw. 38 vorgesehen, um die dauernde Anpreßkraft der Fixierhülse 22 bzw. der Anpreßbuchse 7' zu gewährleisten. Auch hier ist der Druckring 3' bzw. 3" mit der Anschlagfläche auf der Welle festgelegt bzw. mit dieser fest verbunden.

Der in Fig. 6 gezeigte Querschnitt entsprechend der Querschnittsangabe in Fig. 1 und 2 zeigt den Stopfbuchsringraum 21, der innen Von der Welle 4 und radial außen von einer Gehäusewandung begrenzt ist. Die dem Stopfbuchsringraum 21 zugewandte Oberfläche der Gehäusewandung zeigt scharfkantige, spitz bzw. dachförmig ausgeführte Nuten 25 mit einer Dachfläche 27. Strichliert angedeutet sind zackenförmige Vorsprünge 26 dieser Oberfläche mit einer relativ scharfen vorderen Kante 28. Die Drehrichtung der Welle ist mit dem eingezeichneten Pfeil in der Figur angegeben.

Das bedeutet, daß die Vorderfläche der Zacken 26 im wesentlichen radial angeordnet ist, ebenso wie die Hinterfläche der Nuten 25. Sie kann auch mehr oder weniger gegen die Drehrichtung geneigt sein. Die Nuten kann man selbstverständlich durch Einfräsen in die Oberfläche erzeugen, wodurch sich die scharfe Kante von selbst ergibt. Der Abrundungsradius der scharfen Kante ist im allgemeinen kleiner als 0,2 mm vorzusehen.

Es ist günstig, wenn eine gegen die Umfangsrichtung höchstens 15° geneigte Dachfläche 31, 31' der Nuten oder Zacken vorgesehen ist.

Man erhält so günstig eine gut wirkende, einfach herzustellende Dichtung, die äußerst betriebssicher ist und einwandfrei abdichtet.

**Patentansprüche**

1. Stopfbuchsdichtung für Wellen gegenüber ruhenden Wandungen eines Gehäuses einer Maschine oder eines Maschinengestells oder ähnliches, bei der eine aus mindestens zwei Ringen bestehende oder mit einem entsprechenden Verhältnis von Länge zur radialen Querschnittsbreite von mindestens 2:1 ausgebildete Stopfbuchspackung in einem an der Welle gebildeten, radial außen vom Gehäuse begrenzten Stopfbuchsringraum angeordnet ist und eine freiliegende axiale, an einem an der Welle vorgesehenen Bund oder mit ihr dicht- und drehfest verbundenen Ring oder Hülse oder Flanschring gebildete, zur Wellendrehachse senkrechte oder mindestens 60° geneigte Druckfläche vorgesehen ist, an der die Stopfbuchspackung in wellenaxialer Richtung abgestützt ist, dadurch gekennzeichnet, daß die der Stopfbuchsdichtung (1; 1', 1", 1"') zugewandte Oberfläche (30) des Stopfbuchsringraumes (21) zackenförmig genutet oder mit Zacken (28) versehen ist, daß diese Oberflächenunregelmäßigkeiten zur Wellenachse parallel oder mit geringem gegenseitigen Abstand in zur Wellenachse parallelen Reihen mit einer eckigen, scharfen Kante in Drehrichtung vorn an den Zacken (28) oder hinten an den Nuten (25) radial innen angeordnet sind.

2. Stopfbuchsdichtung nach Anspruch 1, dadurch gekennzeichnet, daß der Abstand der Oberflächenunregelmäßigkeiten zwischen 8 und 15 % des Umfangskreises der scharfen Ecken und der Abrundungsradius der scharfen Ecken der Oberflächenunregelmäßigkeiten an der scharfen Kante höchstens 0,2 mm beträgt.

3. Stopfbuchsdichtung nach Anspruch 1 oder 2, dadurch gekennzeichnet, daß die Oberflächenunregelmäßigkeiten dachförmig ausgebildet sind mit einem Dachspitzenwinkel von höchstens 70° vorzugsweise höchstens 40° im Falle von Zacken (26).

4. Stopfbuchsdichtung nach einem der Ansprüche 1 bis 3, dadurch gekennzeichnet, daß die Stopfbuchspackung (1; 1' 1'', ...) gegen die Kraft von Federn (13, 27, 28) abgestützt ist, die sich vorzugsweise innerhalb des Stopfbuchsringraumes (21) befinden.

5. Stopfbuchsdichtung nach einem der Ansprüche 1 bis 4, dadurch gekennzeichnet, daß die Stopfbuchspackung aus mindestens drei Ringen besteht oder mit einem entsprechenden Verhältnis von Länge zur radialen Querschnittsbreite von mindestens 3:1 ausgebildet ist.

6. Stopfbuchsdichtung nach einem der Ansprüche 1 bis 5, dadurch gekennzeichnet, daß die die Federkraft erzeugenden Federn (13) im Stopfbuchsringraum (21') angeordnet sind.

7. Stopfbuchsdichtung nach einem der Ansprüche 1 bis 5, dadurch gekennzeichnet, daß für den Fall eines Sortiergeräts mit zentralem Rotor, eines Stofflösers mit Rotor oder einer Pumpe der Flanschring (11) in Rotornähe sich befindet und abgestützt ist und in den Stopfbuchsringraum (21') vom Rotor her eingreift.

8. Stopfbuchsdichtung nach Anspruch 7, dadurch gekennzeichnet, daß die Federn (13) am Grund des Stopfbuchsringraumes (21'), also an dessen dem Flanschring (11) gegenüber befindlichen Ende angeordnet sind.

9. Stopfbuchsdichtung nach einem der Ansprüche 1 bis 8, dadurch gekennzeichnet, daß der Außendurchmesser der Druckfläche (6, 6') einen größeren Durchmesser hat als der Außendurchmesser der Stopfbuchspackung beträgt.

10. Stopfbuchsdichtung nach einem der Ansprüche 1 bis 9, dadurch gekennzeichnet, daß eine gegen die Umfangsrichtung höchstens 15° geneigte Dachfläche (31, 31') der Nuten oder Zacken vorgesehen ist.

Fig. 3

Fig. 1

Fig. 2

Fig.6

Fig.4

Fig.5

6